# EUROPEAN PATENT SPECIFICATION

(11) **EP 4 121 638 B1**
(45) Date of publication and mention of the grant of the patent: **06.05.2026**
(21) Application number: 21772090.3
(22) Date of filing: 12.03.2021
(51) Int. Cl.: F02C 6/18, F02C 6/04

(54) **POWER AUGMENTATION FOR A GAS TURBINE**
LEISTUNGSERHÖHUNG FÜR EINE GASTURBINE
AUGMENTATION DE PUISSANCE POUR TURBINE À GAZ

(30) Priority: 19.03.2020 US 202062991857 P
(43) Date of publication of application: 25.01.2023
(73) Proprietor: Kellogg Brown & Root LLC, Houston, Texas 77002 (US)
(72) Inventor: LARSEN-SKAANDERUP, John, Houston, TX 77002 (US); KING, Keith, Gaylon, Houston, TX 77002 (US)
(74) Representative: Weickmann & Weickmann PartmbB
(86) International application number: PCT/US2021/022173
(87) International publication number: WO 2021/188385

(56) References cited:
- WO-A1-2012/106095
- US-A- 6 003 298
- US-A- 6 009 723
- US-A1- 2002 092 306
- US-A1- 2011 100 007
- US-A1- 2015 143 828
- US-A1- 2017 241 336
- US-A1- 2018 306 068

## Description

### FIELD OF THE INVENTION

This application relates to boosting the power of a gas turbine, and more particularly, to augmenting a gas turbine used in an ammonia production plant.

### INTRODUCTION

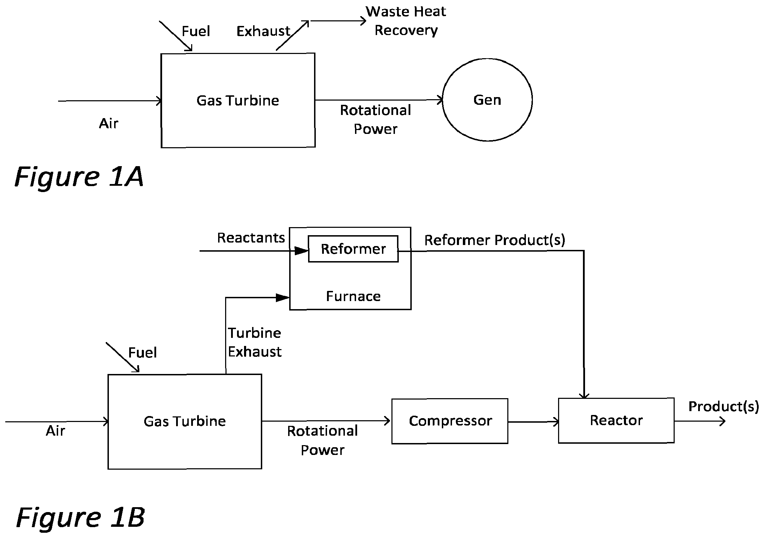

Gas turbines are often used for energy generation, for example, to drive an electric generator, as illustrated schematically in Figure 1A. For energy generation, compressed air and fuel are combusted and the combustion gas is used to provide rotational power that drives the electric generator. The hot turbine exhaust gas is often provided to a waste heat recovery system in an attempt to increase the efficiency of the overall system, for example, by using the heat of the exhaust to generate steam to provide further work, such as powering steam turbines or the like. This use of the exhaust can be seen as remedial, i.e., it is an attempt to mitigate the fact that the gas turbine lacks efficiency. For electric generation, the higher the efficiency of the turbine, the better. In other words, we would like to have a turbine that produces the maximum rotational power (for driving a generator) with the least amount of hot exhaust production. In a perfect (but unobtainable) world, all of the combustion energy would be converted to rotational power and no hot exhaust would be produced. That consideration has driven gas turbine development over the past decades, resulting in gas turbines that are highly efficient (e.g., about 60 %), due to advances in materials and design.

Gas turbines can also be used to drive equipment, such as compressors, for example in certain petrochemical processes/plants. One example is schematically illustrated in Figure 1B. In the illustrated example, the gas turbine provides rotational power to drive a compressor, which provides reactant, such as process air to a reactor. The exhaust gas of the turbine is used to provide combustion air to a reforming furnace, which in the illustrated example, is used for a reformer. An example of such a process is a Haber-Bosch ammonia process, and specifically, the Purifier^{™} process owned by the assignee of the instant application, which is discussed in more detail below.

Notice that in the system illustrated in Figure 1B, the exhaust gas is not simply an inefficiency that must be dealt with; it is an integral part of the process. The capacity of the furnace must be balanced with the size of the compressor, which is determined by the requirement of the reactor capacity. If the gas turbine is too efficient (i.e., it does not provide adequate exhaust to run the furnace), the overall process suffers because the furnace and the compressor are out of balance.

There is a need in the art for boosting the power output of a gas turbine that is used to drive a compressor in a process, such as illustrated in Figure 1B. However, simply using a more efficient gas turbine is not the optimal solution, for the reasons discussed above.

US Patent application No. 2011/100007 A1 describes to a method and apparatus for recovering power from the gaseous stream produced by an oxidation reaction. The gaseous stream from the oxidation reaction is heated and energy is recovered through a gas turbine. The compressor stage of the gas turbine compresses the oxidant feed to the reactor thereby at least partially offsetting the cost of providing the high temperature and pressure reaction conditions in the reactor. Improved control of the power recovery system is obtained by optimizing the efficiency of the gas turbine by feeding gas to the gaseous stream to modulate the flow of gas to the turbine relative to the compressor discharge flow in order to compensate for the consumption of oxidant in the reactor.

WO2012/106095 A1 discloses another ammonia production plant of the prior art.

### SUMMARY

Disclosed herein is a chemical processing plant as defined in claim 1, comprising: a furnace, a process compressor configured to provide compressed air to a secondary reformer, a gas turbine engine configured to drive the process compressor, wherein the gas turbine engine generates an exhaust gas, and wherein at least a portion of the exhaust gas is provided to the furnace as combustion air for the furnace, and a booster compressor configured to provide compressed air to the gas turbine engine (for example, to a turbo compressor of the gas turbine engine). According to some embodiments, the booster compressor is further configured to provide compressed air to the process compressor. According to some embodiments, the booster compressor is further configured to provide compressed air to the furnace. According to some embodiments, the booster compressor is further configured to provide compressed air to the process compressor and to the reforming furnace. According to some embodiments, the booster compressor is powered by an electric motor. According to some embodiments, the booster compressor is powered by a steam turbine. According to some embodiments, the chemical processing plant further comprises an intercooler configured to cool the compressed air provided by the booster compressor to the turbo compressor of the gas turbine engine and to the process compressor. According to some embodiments, the furnace is a reforming furnace configured to convert hydrocarbon in the presence of steam and a combustion gas to form syngas, and wherein the combustion gas comprises the exhaust gas of the gas turbine engine. According to some embodiments, the process compressor is configured to provide the compressed air feed to an ammonia process. According to some embodiments, providing compressed air feed to an ammonia process comprises providing compressed air to a secondary reformer.

Also disclosed herein is an ammonia synthesis system as defined in claim 8 comprising the chemical processing plant of claim 1, further comprising: a reformer comprising the furnace, wherein the reformer is configured to convert natural gas in the presence of steam to form syngas, an ammonia process comprising the secondary reformer configured to react hydrogen from the syngas with nitrogen from a process air feed to form ammonia, wherein the gas turbine engine comprises a turbo compressor, a combustor, and a power turbine. According to some embodiments, the booster compressor is further configured to provide compressed air to the process compressor. According to some embodiments, the booster compressor is further configured to provide compressed air to the reforming furnace. According to some embodiments, the booster compressor is further configured to provide compressed air to the process compressor and to the reforming furnace. According to some embodiments, the booster compressor is powered by an electric motor. According to some embodiments, the booster compressor is powered by a steam turbine. According to some embodiments, the system further comprises an intercooler configured to cool the compressed air provided by the booster compressor to the turbo compressor of the gas turbine engine.

Also disclosed herein is a method of increasing the capacity of an ammonia-producing system as defined in claim 12, wherein the ammonia-producing system comprises: a reforming furnace configured to convert natural gas in the presence of steam to form syngas, an ammonia reactor configured to react hydrogen from the syngas with nitrogen from a compressed air feed to form ammonia, a process compressor configured to provide the compressed air feed to the system, and a gas turbine engine configured to drive the process compressor and to generate an exhaust gas, wherein the gas turbine engine comprises a turbo compressor, a combustor, and a power turbine, and is configured so that at least a portion of the exhaust gas of the gas turbine engine is provided to the reforming furnace to provide at least a portion of the combustion gas, and wherein the method comprises: using a booster compressor configured to provide compressed air to the turbo compressor of the gas turbine engine. According to some embodiments, the booster compressor provides compressed air to the process compressor. According to some embodiments, the booster compressor provides compressed air to the reforming furnace. According to some embodiments, the booster compressor provides compressed air to the process compressor and to the reformer furnace. According to some embodiments, the booster compressor is powered by an electric motor. According to some embodiments, the booster compressor is powered by a steam turbine. According to some embodiments, an intercooler is configured to cool the compressed air provided by the booster compressor to the turbo compressor of the gas turbine engine.

### BRIEF DESCRIPTION OF THE DRAWINGS

Figures 1A and 1B show the use of a gas turbine engine for driving an electric generator and a process compressor, respectively.
Figure 2 shows an ammonia processing plant having a gas turbine engine for driving a process compressor.
Figure 3 shows an embodiment of an ammonia plant with increased capacity.
Figure 4 shows a further embodiment of an ammonia plant with increased capacity.
Figure 5 shows a further embodiment of an ammonia plant with increased capacity.
Figure 6 shows a further embodiment of an ammonia plant with increased capacity.

### DETAILED DESCRIPTION

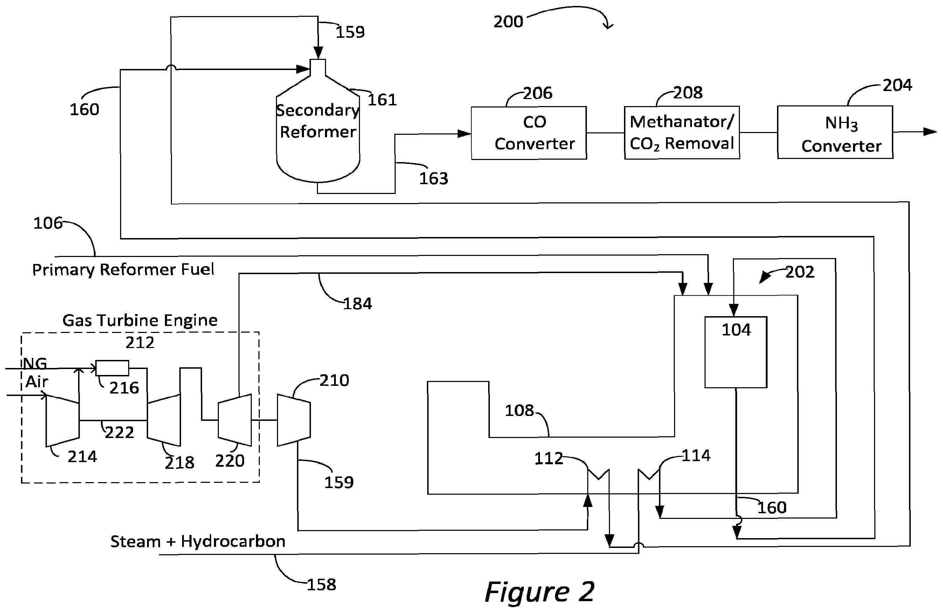

Figure 2 provides a more detailed illustration of an example process 200, such as the one illustrated in Figure 1B. Specifically, Figure 2 illustrates aspects of an ammonia plant in which natural gas is used as a feed stock to produce ammonia. It will be noted that an actual ammonia plant includes various other process steps that are not relevant to this disclosure and so are not discussed.

In the illustrated process 200, steam and natural gas (or other suitable hydrocarbon, such as naphtha) are reacted in a steam reforming furnace 202 to produce syngas (a mixture of carbon monoxide (CO) and hydrogen (H₂)). Fuel may be provided to the furnace 202 via line 106. The steam reforming furnace 202 contains catalyst tubes 104 where steam and hydrocarbons are heated to produce a syngas. The syngas leaves the catalyst tubes and is passed to the secondary reformer 161 via 160. The steam and hydrocarbon mixture (line 158) is typically preheated before entering the reformer catalyst tube and here one preheat coil is shown as 114, located in the convection section 108 of the reformer 202. In a similar manner, the process air for the secondary reformer (line 159) is typically preheated in one or more preheat coils located in the convection section of the primary reformer. One such coil 112 is shown. After preheating the process air is passed to the secondary reformer via pipe 159. The effluent of the steam reforming furnace enters a secondary reformer 161 where it reacts with process air from a process compressor 210 to form more syngas. The resulting syngas stream 163 is treated in various processes to ultimately provide H₂ and N₂ to an ammonia converter 204. For example, the syngas may be reacted in a carbon monoxide converter 206, which converts the carbon monoxide to carbon dioxide (CO₂) and provides more H₂. The resulting gas stream may also be treated by one or more CO₂ removal steps and/or methanation steps 208, which remove CO₂ from the stream. Steps 206 and 208 are not particularly relevant to this disclosure and so are not discussed further.

The H₂ obtained from the syngas reacts with compressed nitrogen (N₂) in the ammonia converter 204 to produce ammonia (NH₃). The ammonia converter includes a catalyst, which is typically an iron-based catalyst but may alternatively or additionally include other metal compounds, such as ruthenium compounds. A process compressor 210 provides the compressed N₂ for the ammonia reaction. The process compressor 210 is typically a centrifugal compressor and is powered by a gas turbine engine 212, which is discussed below.

The gas turbine engine 212 comprises a turbo compressor 214, a combustor 216, a high-pressure turbine 218, a power turbine 220, and a shaft 222. Examples of gas turbine engines such as 212 are known in the art and include Frame 5 gas turbine engines such as MS5001/5002 series turbines (General Electric), MS6001 series turbines (General Electric), and the like. It should be appreciated that the disclosed methods and systems are not limited to any particular type of gas turbine engine. As mentioned above, power from the gas turbine engine 212 is provided to power the process compressor 210. As also mentioned, the turbine exhaust gas of the gas turbine engine 184 is provided as combustion gas for the reforming furnace 202. In other words, the oxygen remaining in the turbine exhaust gas is used as feed for the combustion process occurring in the reforming furnace.

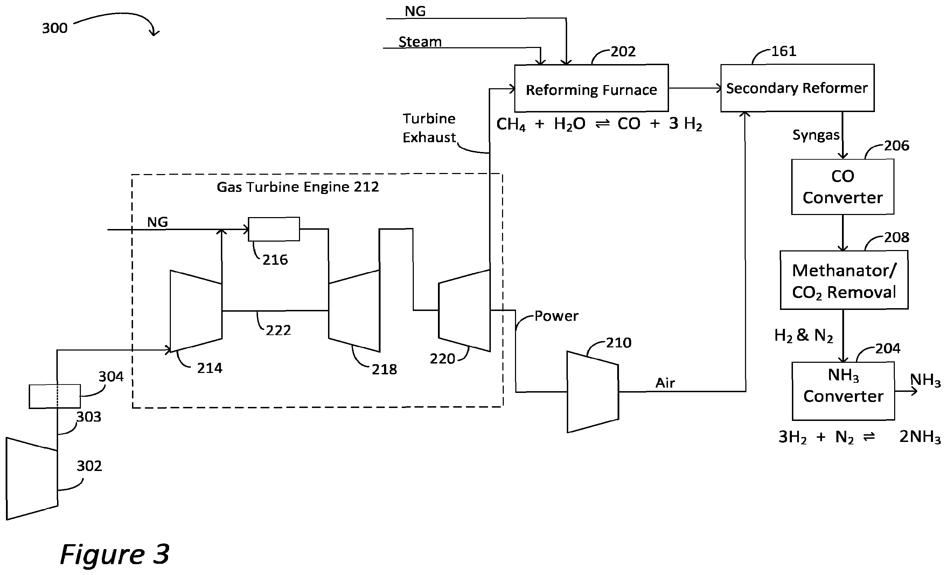

To increase the production of NH₃, it is desirable to increase the capacity of the process compressor 210. As mentioned in the Introduction section above, simply providing a more efficient gas turbine engine is not a good solution for increasing the capacity of the process compressor in many instances, because super-high efficiency turbine engines lack the capacity to supply sufficient combustion air for the reforming furnace 202. In other words, the duty of the reforming furnace must be balanced with the capacity of the process compressor driving the ammonia reaction. The inventor has discovered that power to the process compressor 210 can be increased by the addition of a booster compressor 302, as shown in the improved ammonia process 300 illustrated in Figure 3. According to preferred embodiments, the booster compressor is independent of the shaft 222 of the gas turbine engine 212, and so can be run at a speed independent of the gas turbine engine. For example, the booster compressor 302 can be driven by a steam turbine or an electric motor. In the case that a steam turbine is used, the steam turbine driver can be driven by process waste steam. The booster compressor 302 may be a multistage compressor, for example, a two or three stage compressor.

Air from the booster compressor 302 is provided to the turbo compressor 214 (line 303) of the gas turbine engine 212. The air from the booster compressor 302 may be cooled using an optional intercooler 304, depending on the amount of boost needed. Providing air from the booster compressor to the turbo compressor 214 unloads the gas turbine engine 212, allowing it to run at a different speed to satisfy the need of the process compressor 210. The booster compressor 302 also increases the mass flow through the gas turbine engine 212. Thus, the amount of turbine exhaust gas provided to the reforming furnace 202 is increased. So, the addition of the booster compressor 302 not only increases the capacity of the process compressor 210; it also increases the capacity of the reforming furnace 202.

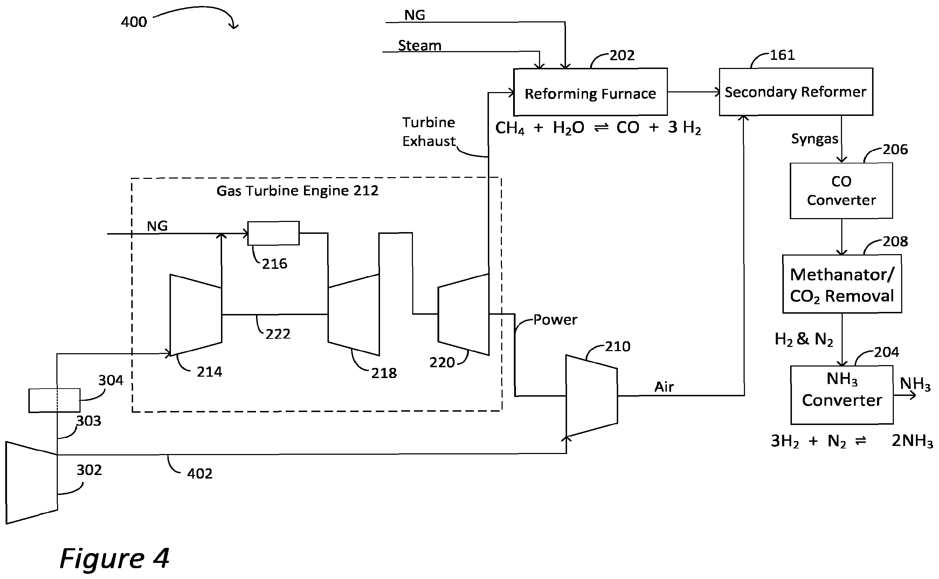

Figure 4 illustrates an alternative embodiment of an ammonia process 400, wherein air from the booster compressor 302 is supplied to the process compressor 210 (illustrated by line 402) in addition to being supplied to the turbo compressor of the gas turbine engine. Thus, the booster compressor boosts both the gas turbo compressor and the process compressor. Supplying air from the booster compressor 302 to the suction of the process compressor 210 reduces the power requirement of the process compressor, thereby reducing the power requirement of the gas turbine engine 212. It is thus possible to satisfy a much wider range of plant capacities with any given gas turbine engine, since the booster compressor enhances the performance of the gas turbine engine. Note that in the illustrated process 400, the air from the booster compressor (line 402) is not cooled. However, according to some embodiments, the booster compressor air could be cooled before it is provided to the process compressor. For example, the air stream 402 could be taken downstream of the intercooler 302.

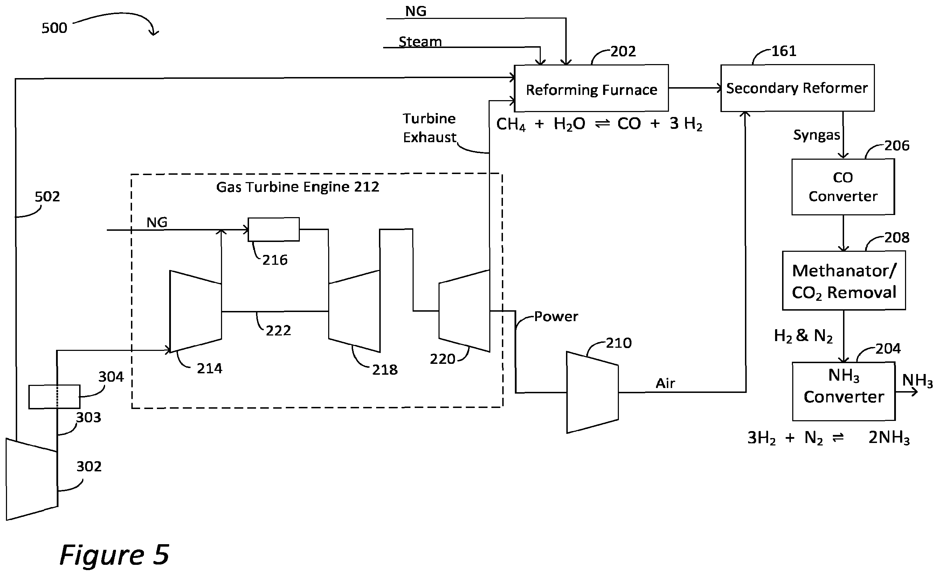

Figure 5 illustrates another alternative embodiment of an ammonia process 500, in which compressed air from the booster compressor 302 (line 502) is provided as combustion air to the reforming furnace 202, in addition to being supplied to the turbo compressor. According to some embodiments, the air stream 502 may be taken after an intermediate stage of the booster compressor, for example, after the first stage. Using the booster compressor 302 to supply combustion air to the reforming furnace 202 in a case where the gas turbine exhaust is not satisfying the reformer furnace has the benefit of eliminating the need to install a combustion air fan for the reforming furnace.

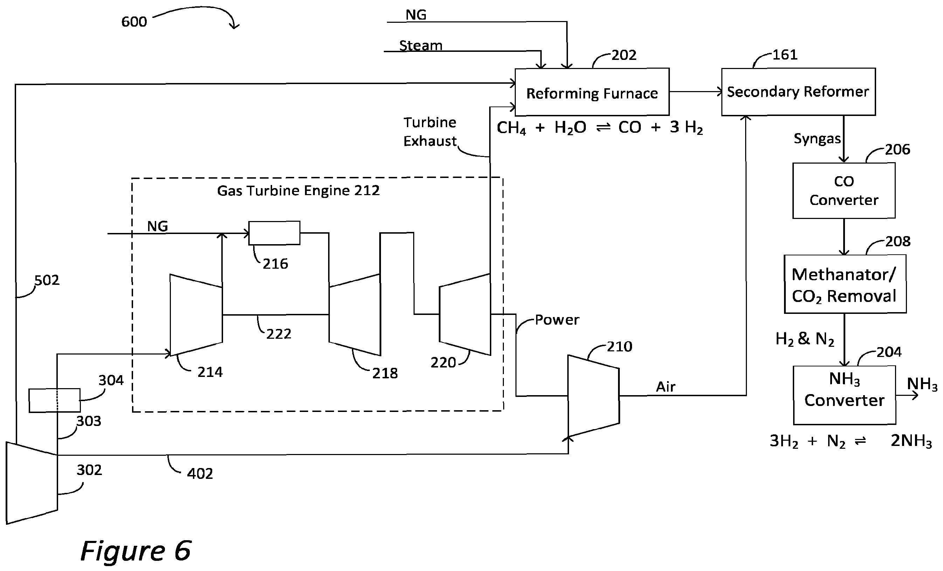

Figure 6 illustrates another embodiment of an ammonia process 600, wherein the booster compressor 302 provides air to the process compressor 210 (line 402) and combustion air to the reforming furnace 202 (line 502) in addition to supplying air to the turbo compressor 214. The embodiment illustrated in Figure 6 is essentially a combination of the embodiments of Figures 4 and 5.

Although particular embodiments of the present invention have been shown and described, it should be understood that the above discussion is not intended to limit the present invention to these embodiments. It will be obvious to those skilled in the art that various changes and modifications may be made without departing from the scope of the present invention. Thus, the present invention is intended to cover modifications that fall within the scope of the present invention as defined by the claims.

## Claims

1. A chemical processing plant comprising:
a furnace (202),
a process compressor (210) configured to provide compressed air to a secondary reformer (161),
a gas turbine engine (212) configured to drive the process compressor (210), wherein the gas turbine engine generates an exhaust gas, and wherein at least a portion of the exhaust gas is provided to the furnace (202) as combustion air, and **characterized in that** it comprises:
a booster compressor (302) configured to provide compressed air to a turbo compressor (214) of the gas turbine engine (212).

2. The chemical processing plant of claim 1, wherein the booster compressor (302) is further configured to provide compressed air to the process compressor (210), and/or to provide compressed air to the furnace (202), and/or to provide compressed air to both the process compressor (210) and to the reforming furnace (202).

3. The chemical processing plant of claims 1 or 2, further comprising an intercooler (304) configured to cool the compressed air provided by the booster compressor (302) to the turbo compressor (214) of the gas turbine engine (212).

4. The chemical processing plant of any of claims 1-3, wherein the booster compressor (302) is powered by an electric motor or by a steam turbine.

5. The chemical processing plant of claim 2, further comprising an intercooler (304) configured to cool the compressed air provided by the booster compressor (302) to the turbo compressor (214) of the gas turbine engine (212) and to the process compressor (210).

6. The chemical processing plant of any of claims 1-5, wherein the furnace (202) is a furnace of a primary reformer configured to convert hydrocarbon in the presence of steam to form syngas.

7. The chemical processing plant of any of claims 1-6, wherein the process compressor (210) is configured to provide compressed air feed to an ammonia process.

8. An ammonia synthesis system comprising the chemical processing plant of claim 1, further comprising:
a reformer comprising the furnace (202), wherein the reformer is configured to convert natural gas in the presence of steam to form syngas,
an ammonia process comprising the secondary reformer (161) configured to react hydrogen from the syngas with nitrogen from a process air feed to form ammonia, wherein
the gas turbine engine (212) comprises a turbo compressor (214), a combustor (216), and a power turbine (220).

9. The system of claim 8, wherein the booster compressor (302) is further configured to provide compressed air to the process compressor (210), and/or to provide compressed air to the furnace (202), and/or to provide compressed air to the process compressor (210) and to the furnace (202).

10. The system of any of claims 8-9, wherein the booster compressor (302) is powered by an electric motor or by a steam turbine.

11. The system of any of claims 8-10, further comprising an intercooler (304) configured to cool the compressed air provided by the booster compressor (302) to the turbo compressor (214) of the gas turbine engine (212).

12. A method of increasing the capacity of an ammonia-producing system, wherein the ammonia-producing system comprises:
a reformer comprising a furnace (202), wherein the reformer is configured to convert natural gas in the presence of steam to form syngas,
an ammonia process comprising a secondary reformer (161) configured to react hydrogen from the syngas with nitrogen from a compressed air feed to form ammonia,
a process compressor (210) configured to provide the compressed air feed to the secondary reformer (161), and
a gas turbine engine (212) configured to drive the process compressor and to generate an exhaust gas, wherein the gas turbine engine comprises a turbo compressor (214) a combustor (216,) and a power turbine (218), and is configured so that at least a portion of the exhaust gas of the gas turbine engine is provided to the furnace to provide combustion air for the furnace, the method **characterized in that** it comprises:
using a booster compressor (302) configured to provide compressed air to the turbo compressor of the gas turbine engine.

13. The method of claim 12, further comprising using the booster compressor to provide compressed air to one or more of the process compressor and the furnace.

14. The method of claims 12 or 13, further comprising powering the booster compressor by an electric motor or by a steam turbine.

15. The method of any of claims 12-14, further comprising using an intercooler configured to cool the compressed air provided by the booster compressor to the turbo compressor of the gas turbine engine.

## Patentansprüche

1. Chemische Verarbeitungsanlage, umfassend:
einen Ofen (202),
einen Prozesskompressor (210), der konfiguriert ist, um Druckluft für einen Sekundärreformer (161) bereitzustellen,
einen Gasturbinenmotor (212), der konfiguriert ist, um den Prozesskompressor (210) anzutreiben, wobei der Gasturbinenmotor ein Abgas erzeugt, und wobei mindestens ein Abschnitt des Abgases dem Ofen (202) als Verbrennungsluft bereitgestellt wird, und **dadurch gekennzeichnet, dass** er Folgendes umfasst:
einen Boosterkompressor (302), der konfiguriert ist, um Druckluft für einen Turbokompressor (214) des Gasturbinentriebwerks (212) bereitzustellen.

2. Chemische Verarbeitungsanlage nach Anspruch 1, wobei der Boosterkompressor (302) ferner konfiguriert ist, um Druckluft für den Prozesskompressor (210) bereitzustellen, und/oder um Druckluft für den Ofen (202) bereitzustellen, und/oder um Druckluft sowohl für den Prozesskompressor (210) als auch für den Reformierofen (202) bereitzustellen.

3. Chemische Verarbeitungsanlage nach Anspruch 1 oder 2, ferner umfassend einen Zwischenkühler (304), der konfiguriert ist, um die vom Boosterkompressor (302) dem Turbokompressor (214) der Gasturbinenmaschine (212) bereitgestellte Druckluft zu kühlen.

4. Chemische Verarbeitungsanlage nach einem der Ansprüche 1 bis 3, wobei der Boosterkompressor (302) von einem Elektromotor oder von einer Dampfturbine angetrieben wird.

5. Chemische Verarbeitungsanlage nach Anspruch 2, ferner umfassend einen Zwischenkühler (304), der konfiguriert ist, um die vom Boosterkompressor (302) an den Turbokompressor (214) des Gasturbinentriebwerks (212) und an den Prozesskompressor (210) bereitgestellte Druckluft zu kühlen.

6. Chemische Verarbeitungsanlage nach einem der Ansprüche 1 bis 5, wobei der Ofen (202) ein Ofen eines Primärreformers ist, der konfiguriert ist, um Kohlenwasserstoff in Gegenwart von Dampf zur Bildung von Synthesegas umzuwandeln.

7. Chemische Verarbeitungsanlage nach einem der Ansprüche 1 bis 6, wobei der Prozesskompressor (210) konfiguriert ist, um komprimierte Luftzufuhr für einen Ammoniakprozess bereitzustellen.

8. Ammoniaksynthesesystem, umfassend die chemische Verarbeitungsanlage nach Anspruch 1, ferner umfassend:
einen Reformer, umfassend den Ofen (202), wobei der Reformer konfiguriert ist, um Erdgas in Gegenwart von Dampf zur Bildung von Synthesegas umzuwandeln,
einen Ammoniakprozess, der den Sekundärreformer (161) umfasst, der konfiguriert ist, um Wasserstoff aus dem Synthesegas mit Stickstoff aus einer Prozessluftzufuhr zu reagieren, um Ammoniak zu bilden, wobei die Gasturbinenmaschine (212) einen Turbokompressor (214), eine Brennkammer (216) und eine Nutzturbine (220) umfasst.

9. System nach Anspruch 8, wobei der Boosterkompressor (302) ferner konfiguriert ist, um Druckluft für den Prozesskompressor (210) bereitzustellen, und/oder um Druckluft für den Ofen (202) bereitzustellen, und/oder um Druckluft für den Prozesskompressor (210) und den Ofen (202) bereitzustellen.

10. System nach einem der Ansprüche 8 bis 9, wobei der Boosterkompressor (302) von einem Elektromotor oder von einer Dampfturbine angetrieben wird.

11. System nach einem der Ansprüche 8 bis 10, ferner umfassend einen Zwischenkühler (304), der konfiguriert ist, um die vom Boosterkompressor (302) dem Turbokompressor (214) der Gasturbinenmaschine (212) bereitgestellte Druckluft zu kühlen.

12. Verfahren zum Erhöhen der Kapazität eines ammoniakproduzierenden Systems, wobei das ammoniakproduzierende System Folgendes umfasst:
einen Reformer, umfassend einen Ofen (202),
wobei der Reformer konfiguriert ist, um Erdgas in Gegenwart von Dampf zur Bildung von Synthesegas umzuwandeln,
ein Ammoniakverfahren, das einen Sekundärreformer (161) umfasst, der konfiguriert ist, um Wasserstoff aus dem Synthesegas mit Stickstoff aus einer Druckluftzufuhr unter Bildung von Ammoniak umzusetzen,
einen Prozesskompressor (210),
der konfiguriert ist, um den Sekundärreformer (161) mit Druckluft zu versorgen, und
eine Gasturbinenmaschine (212),
die konfiguriert ist, um den Prozesskompressor anzutreiben und ein Abgas zu erzeugen, wobei die Gasturbinenmaschine einen Turbokompressor (214),
eine Brennkammer (216) und eine Leistungsturbine (218) umfasst,
und konfiguriert ist, um mindestens einen Abschnitt des Abgases der Gasturbinenmaschine dem Ofen zuzuführen, um Verbrennungsluft für den Ofen bereitzustellen, wobei das Verfahren **dadurch gekennzeichnet ist, dass** es Folgendes umfasst:
Verwenden eines Boosterkompressors (302),
der konfiguriert ist, um Druckluft für den Turbokompressor der Gasturbinenmaschine bereitzustellen.

13. Verfahren nach Anspruch 12, ferner umfassend die Verwendung des Boosterkompressors zum Bereitstellen von Druckluft für den Prozesskompressor oder den Ofen oder mehrere davon.

14. Verfahren nach Anspruch 12 oder 13, ferner umfassend das Antreiben des Boosterkompressors durch einen Elektromotor oder durch eine Dampfturbine.

15. Verfahren nach einem der Ansprüche 12 bis 14, ferner umfassend die Verwendung eines Zwischenkühlers, der konfiguriert ist, um die vom Boosterkompressor an den Turbokompressor der Gasturbinenmaschine bereitgestellte Druckluft zu kühlen.

## Revendications

1. Usine de traitement chimique comprenant :
un four (202),
un compresseur de procédé (210) configuré pour fournir de l'air comprimé à un reformeur secondaire (161),
un moteur à turbine à gaz (212) configuré pour entraîner le compresseur de procédé (210), dans laquelle le moteur à turbine à gaz génère un gaz d'échappement, et dans laquelle au moins une partie du gaz d'échappement est fournie au four (202) comme air de combustion, et **caractérisée en ce qu'**elle comprend : un compresseur d'appoint (302) configuré pour fournir de l'air comprimé à un turbocompresseur (214) du moteur à turbine à gaz (212).

2. Usine de traitement chimique selon la revendication 1, dans laquelle le compresseur d'appoint (302) est en outre configuré pour fournir de l'air comprimé au compresseur de traitement (210), et/ou pour fournir de l'air comprimé au four (202), et/ou pour fournir de l'air comprimé à la fois au compresseur de traitement (210) et au four de reformage (202).

3. Usine de traitement chimique selon les revendications 1 ou 2, comprenant en outre un refroidisseur intermédiaire (304) configuré pour refroidir l'air comprimé fourni par le compresseur d'appoint (302) au turbocompresseur (214) du moteur à turbine à gaz (212).

4. Usine de traitement chimique selon l'une quelconque des revendications 1 à 3, dans laquelle le compresseur d'appoint (302) est alimenté par un moteur électrique ou par une turbine à vapeur.

5. Usine de traitement chimique selon la revendication 2, comprenant en outre un refroidisseur intermédiaire (304) configuré pour refroidir l'air comprimé fourni par le compresseur d'appoint (302) au turbocompresseur (214) du moteur à turbine à gaz (212) et au compresseur de traitement (210).

6. Usine de traitement chimique selon l'une quelconque des revendications 1 à 5, dans laquelle le four (202) est un four d'un reformeur primaire configuré pour convertir les hydrocarbures en présence de vapeur d'eau pour former du gaz de synthèse.

7. Usine de traitement chimique selon l'une quelconque des revendications 1 à 6, dans laquelle le compresseur de procédé (210) est configuré pour fournir une alimentation en air comprimé à un procédé à l'ammoniac.

8. Système de synthèse d'ammoniac comprenant l'usine de traitement chimique selon la revendication 1, comprenant en outre :
un reformeur comprenant le four (202), dans lequel le reformeur est configuré pour convertir le gaz naturel en présence de vapeur pour former du gaz de synthèse,
un procédé de production d'ammoniac comprenant le reformeur secondaire (161) configuré pour faire réagir l'hydrogène du gaz de synthèse avec l'azote d'une alimentation en air de procédé afin de former de l'ammoniac, dans lequel
le moteur à turbine à gaz (212) comprend un turbocompresseur (214), une chambre de combustion (216) et une turbine de puissance (220).

9. Système selon la revendication 8, dans lequel le compresseur d'appoint (302) est en outre configuré pour fournir de l'air comprimé au compresseur de procédé (210), et/ou pour fournir de l'air comprimé au four (202), et/ou pour fournir de l'air comprimé au compresseur de procédé (210) et au four (202).

10. Système selon l'une quelconque des revendications 8 à 9, dans lequel le compresseur d'appoint (302) est alimenté par un moteur électrique ou par une turbine à vapeur.

11. Système selon l'une quelconque des revendications 8 à 10, comprenant en outre un refroidisseur intermédiaire (304) configuré pour refroidir l'air comprimé fourni par le compresseur d'appoint (302) au turbocompresseur (214) du moteur à turbine à gaz (212).

12. Procédé d'augmentation de la capacité d'un système de production d'ammoniac, dans lequel le système de production d'ammoniac comprend :
un réformateur comprenant un four (202),
dans lequel le reformeur est configuré pour convertir le gaz naturel en présence de vapeur d'eau afin de former du gaz de synthèse,
un procédé à l'ammoniac comprenant un reformeur secondaire (161) configuré pour faire réagir l'hydrogène du gaz de synthèse avec l'azote d'une alimentation en air comprimé pour former de l'ammoniac,
un compresseur de procédé (210)
configuré pour fournir l'alimentation en air comprimé au reformeur secondaire (161), et
un moteur à turbine à gaz (212)
configuré pour entraîner le compresseur de procédé et pour générer un gaz d'échappement, dans lequel le moteur à turbine à gaz comprend un turbocompresseur (214)
un brûleur (216) et une turbine de puissance (218),
et est configuré de manière à ce qu'au moins une partie des gaz d'échappement du moteur à turbine à gaz soit fournie au four pour alimenter le four en air de combustion, le procédé étant **caractérisé en ce qu'**il comprend :
l'utilisation d'un compresseur d'appoint (302) configuré pour fournir de l'air comprimé au turbocompresseur du moteur à turbine à gaz.

13. Procédé selon la revendication 12, comprenant en outre l'utilisation du compresseur d'appoint pour fournir de l'air comprimé à l'un ou plusieurs du compresseur de procédé et du four.

14. Procédé selon les revendications 12 ou 13, comprenant en outre l'alimentation du compresseur d'appoint par un moteur électrique ou par une turbine à vapeur.

15. Procédé selon l'une quelconque des revendications 12 à 14, comprenant en outre l'utilisation d'un refroidisseur intermédiaire configuré pour refroidir l'air comprimé fourni par le compresseur d'appoint au turbocompresseur du moteur à turbine à gaz.
